# FASCICULE DE BREVET EUROPEEN

(11) **EP 0 378 490 B1**
(45) Date de publication et mention de la délivrance du brevet: **07.04.1993**
(21) Numéro de dépôt: 90420012.8
(22) Date de dépôt: 09.01.1990
(51) Int. Cl.: A22C 17/04

(54) **Dispositif de découpe de viande entre deux zones de dureté différente**
Vorrichtung zum Schneiden von Fleisch zwischen zwei Stellen von verschiedener Härte
Meat cutting device between two zones with a different hardness

(30) Priorité: 13.01.1989 FR 8900571
(43) Date de publication de la demande: 18.07.1990
(73) Titulaire: ETABLISSEMENTS ARRIVE S.A. (Société Anonyme de droit français), F-85250 Saint Fulgent (FR); UNION FINANCIERE POUR LE DEVELOPPEMENT DE L'ECONOMIE CEREALIERE-UNIGRAINS (Société Anonyme de droit français), F-75016 Paris (FR)
(72) Inventeur: Villemin, Daniel, F-94430 Chennevières S/ Marne (FR); Leclère, Jean, F-94000 Créteil (FR); Guilbaud, Daniel, F-85250 Saint Fulgent (FR); Plusa, Janusz, F-94370 Sucy en Brie (FR); Romand, Paul, F-26000 Valence (FR)
(74) Mandataire: Maureau, Philippe

(56) Documents cités:
- EP-A- 0 056 656
- FR-A- 2 226 933

## Description

La présente invention a pour objet un dispositif de découpe de viande entre deux zones de dureté différente, le terme viande devant être pris dans son sens général et désignant tout aussi bien de la viande de bovins, ovins et porcs, que de la chair de volailles ou de poissons, et le terme découpe recouvrant également les opérations de désossage et de séparation entre la viande et la carcasse d'un animal, par exemple entre les filets et la carcasse d'une volaille.

Le document FR-A-2 226 933 décrit un dispositif de découpe d'une pièce de viande ou de a viande d'une carcasse d'animal comportant toutes les caractéristique du préambule de la revendication et comprenant un châssis sur lequel est monté un jeu de poulies à axes parallèles servant au guidage d'un fil de coupe, une de ces poulies étant motorisée, et une autre étant une poulie de tension.

Les volailles comestibles de grosse taille, et notamment les dindes, qui sont rarement vendues entières, sont découpées après abattage en un certain nombre de morceaux conditionnés indépendamment les uns des autres.

Dans le cas d'une dinde, par exemple, après que les abats aient été retirés par un orifice naturel et/ou par une incision ménagée dans la partie postérieure de l'animal, celui-ci est ressué, puis il est suspendu à une chaîne dont le déplacement assure l'amenée de la carcasse à un certain nombre de postes où les différents morceaux sont désossés et découpés manuellement par des opérateurs. Ce traitement nécessite une main-d'oeuvre importante tout en présentant l'inconvénient que la qualité de la découpe dépend de l'habileté de l'opérateur, et qu'une quantité non négligeable de viande reste accrochée à la carcasse en fin de traitement, ce qui constitue une perte pour le conditionneur. Il faut en effet considérer que le squelette osseux d'une volaille ne possède pas une surface extérieure parfaitement convexe, mais comporte également, compte tenu de la morphologie de l'animal, des parties en creux hors desquelles il n'est pas aisé de retirer la viande qui y est logée.

Il est donc opportun de disposer, pour optimiser l'opération de séparation des filets vis-à-vis de la carcasse d'un dispositif particulièrement adapté pour suivre le contour de la carcasse de la volaille, malgré la complexité de la structure de celle-ci, et les variations dimensionnelles d'une dinde à une autre.

La présente invention vise à fournir un tel dispositif.

Ce dispositif, destiné à la découpe de la viande d'une pièce de viande ou de la viande d'une carcasse d'animal fixée sur un outil de contention connu en soi disposé en dehors de la zone à découper, comprenant un châssis sur lequel est monté un jeu de poulies à axes parallèles servant au guidage d'un fil de coupe, une de ces poulies étant motorisée, et une autre étant une poulie de tension, est caractérisé en ce qu'il comprend un bâti fixe à l'extrémité supérieure duquel est articulé, autour d'un axe horizontal et transversal à l'axe de l'outil de contention, un châssis équipé d'un jeu de poulies servant au guidage d'un fil de coupe, ce jeu de poulies, dont l'une d'entre elles est motorisée, comprenant une première poulie située à une distance de l'axe d'articulation du châssis supérieure à la distance entre cet axe et l'extrémité de l'outil de contention, qui en est le plus éloignée, une tangente à cette poulie étant sensiblement située dans le plan médian longitudinal de l'outil de contention, une seconde poulie d'axe parallèle à la première, montée sur un chariot déplaçable parallèlement à l'axe d'articulation du châssis, cette poulie étant susceptible lors du mouvement du chariot d'être amenée de part et d'autre du plan médian longitudinal de l'outil de contention, une troisième poulie associée au chariot, d'axe parallèle à ceux des deux premières, qui est une poulie de tension, et éventuellement d'autres poulies de guidage montées sur le châssis.

Il est ainsi possible de faire basculer le châssis sur le bâti pour amener le fil de coupe au contact de la viande, puis tout en poursuivant le basculement du châssis avec entraînement du fil coupant, de déplacer le chariot pour réaliser la découpe en permettant au fil de suivre le profil délimité par la surface de séparation entre deux zones de dureté différente, par exemple entre de la viande et une structure osseuse.

Selon une forme d'exécution, la poulie motorisée est celle située le plus loin de l'axe d'articulation du châssis, et elle est entraînée en rotation par un moteur électrique monté sur le châssis.

Le guidage du chariot est réalisé sur des colonnes solidaires du châssis, et son déplacement est réalisé par un vérin dont le corps est fixé sur le châssis et la tige est fixée sur le chariot.

Selon une caractéristique de l'invention, le châssis est monté sur le bâti, avec interposition d'un support, ce support étant monté sur le bâti avec possibilité de réglage angulaire autour d'un axe parallèle à l'axe de contention de la pièce de viande, et le châssis étant monté pivotant sur le support autour d'un axe perpendiculaire à l'axe de contention de la pièce de viande.

Le préréglage ou réglage de l'inclinaison latérale du support est effectué en fonction du type de coupe à réaliser dans la pièce de viande, en tenant compte de la position de zone à découper, par rapport à l'outil de contention.

Pour sa part le mouvement de basculement du châssis est réalisé par l'intermédiaire d'un vérin hydraulique dont le corps est articulé autour d'un axe horizontal et parallèle à l'axe de basculement sur le bâti ou le support de châssis monté sur ce dernier, et dont l'extrémité de la tige est articulée autour d'un axe parallèle au précédent sur le châssis.

Il est intéressant de disposer d'un vérin hydraulique pour réaliser un tel mouvement, du fait de la précision de positionnement obtenue. Si l'installation est équipée d'une centrale pneumatique il est possible de commander pneumatiquement le mouvement du vérin hydraulique, par montage d'une interface pneumatique/hydraulique appropriée.

Conformément à une autre caractéristique de l'invention, ce dispositif est équipé d'un guide allongé et orienté selon l'axe de la ligne d'attaque de la coupe, destiné à venir prendre appui sur la face supérieure de la pièce de viande, ce guide étant monté sur un bras articulé sur le châssis autour d'un axe correspondant à l'axe de pivotement du châssis et agencé pour demeurer en appui contre la pièce de viande au cours de la fin du basculement du châssis.

Les moyens de commande de ce dispositif sont tels que, partant d'une position dans laquelle le châssis portant le fil de coupe se trouve éloigné de la pièce de viande, il est procédé successivement à la détection de présence de celle-ci, au basculement du châssis à grande vitesse en direction de la pièce, jusqu'à ce que le fil arrive au contact de cette dernière, le chariot étant dans une position telle que la poulie motrice et la poulie adjacente portée par le chariot sont toutes les deux situées du même côté de la ligne d'attaque de la coupe et plus précisément du côté où la découpe doit être effectuée, au déplacement du chariot pour amener la poulie solidaire de celui-ci de l'autre côté de cette ligne, à la poursuite du mouvement de basculement à vitesse lente, tout en procédant à un déplacement du chariot en sens inverse de celui du déplacement précédent, en tenant compte du profil de la surface délimitant les deux zones de dureté différente, avec entraînement du fil de coupe, puis au basculement en sens inverse du châssis avec arrêt du fil de coupe.

Dans la mesure où il est destiné à la découpe d'un filet d'une volaille, l'outil de contention comporte des moyens de fixation par l'intérieur de la volaille, sternum tourné du côté du châssis, et son axe est transversal à l'axe d'articulation du châssis, la seconde poulie étant déplaçable de part et d'autre du plan médian longitudinal contenant l'axe de l'outil de contention.

La découpe est attaquée le plus près possible du sternum, grâce au ménagement de fentes dans la peau de part et d'autre de celui-ci, ainsi qu'à la présence du guide qui vient prendre appui sur le sternum et contre lequel vient prendre appui latéralement le fil de coupe.

Dans ce cas les moyens de commande du dispositif sont tels que, partant d'une position dans laquelle le châssis portant le fil de coupe se trouve éloigné de la volaille, il est procédé successivement à la détection de présence de la volaille, au basculement du châssis à grande vitesse en direction de la volaille, jusqu'à ce que le fil arrive au contact de cette dernière, le chariot étant dans une position telle que la poulie motrice et la poulie adjacente portée par le chariot sont toutes les deux situées du même côté du sternum et plus précisément du côté où le filet doit être découpé, au déplacement du chariot pour amener la poulie solidaire de celui-ci de l'autre côté du sternum, à la poursuite du mouvement de basculement à vitesse lente, tout en procédant à un déplacement du chariot en sens inverse de celui du déplacement précédent, en tenant compte du profil de la carcasse de la volaille, avec entraînement du fil de coupe, puis au basculement en sens inverse du châssis avec arrêt du fil de coupe.

De toute façon, l'invention sera bien comprise à l'aide de la description qui suit, en référence au dessin schématique annexé, représentant à titre d'exemple non limitatif une forme d'exécution de ce dispositif, dans le cas de son application à la découpe du filet droit d'une volaille :

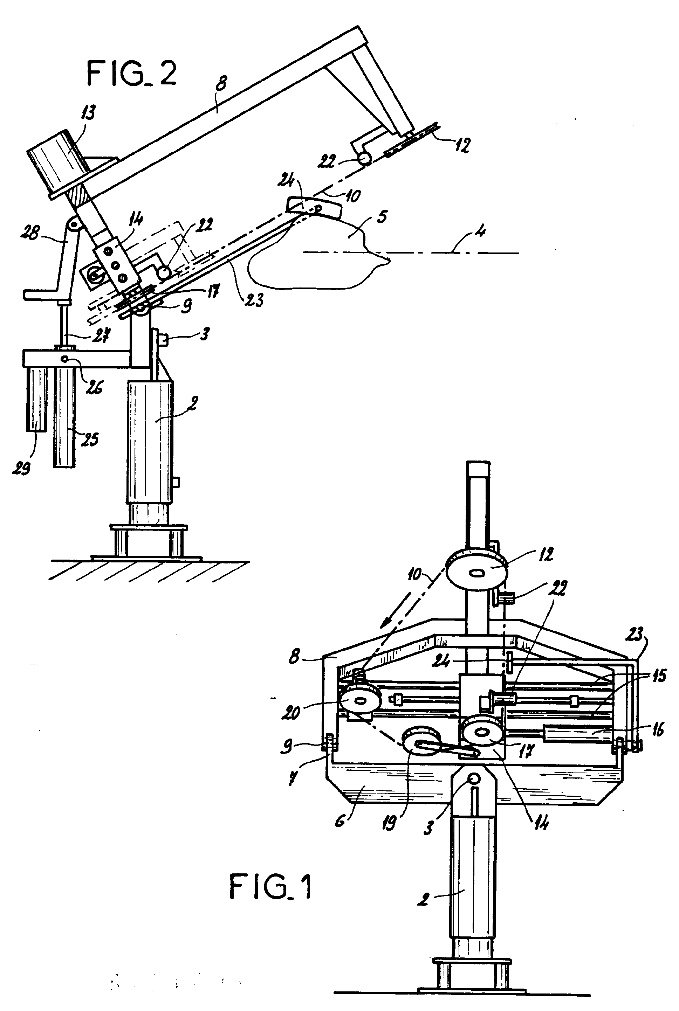

Figure 1 en est une vue de face ;
Figure 2 en est une vue de côté ;
Figures 3 à 5 sont trois vues très schématiques du parcours du fil de coupe, et de la position de celui-ci par rapport à la volaille, au cours de différentes séquences de fonctionnement.

Le dispositif selon l'invention comprend un bâti fixe 2, à l'extrémité supérieure duquel est monté, articulé autour d'un axe 3, parallèle à l'axe 4 d'un dispositif de contention par l'intérieur de la volaille 5, un support 6. Ce support 6 peut être réglé angulairement, ce réglage n'étant pas modifié au cours de l'opération de découpe d'une dinde. Ce support 6 comporte deux branches latérales 7, faisant saillie vers le haut, servant au montage articulé d'un châssis 8, autour d'un axe 9, transversal à l'axe 3.

Le châssis 8 est équipé d'un jeu de poulies servant au guidage d'un fil de coupe 10, qui est par exemple du type décrit dans le brevet français 85 08276 au nom de la Demanderesse. Les différentes poulies de ce jeu de poulies sont pivotantes autour d'axes parallèles les uns aux autres, afin d'assurer l'entraînement et le guidage du fil dans un plan parallèle à l'axe de pivotement du châssis. Ce jeu de poulies comprend une première poulie 12 entraînée en rotation à partir d'un moteur 13, solidaire du châssis. Cette première poulie est située à une distance de l'axe d'articulation du châssis, supérieure à la distance entre cet axe et la partie de la volaille qui en est le plus éloignée, le plan médian longitudinal de la volaille étant en outre sensiblement tangent à cette poulie. Sur le châssis 8 est monté, à l'extrémité de celui-ci située du côté de l'axe de pivotement 9, un chariot 14 déplaçable sur des colonnes 15 de guidage et sous l'action d'un vérin 16, parallèlement à l'axe de rotation 9. Ce chariot porte une seconde poulie 17, ainsi que le support 18 d'une troisième poulie, constituant une poulie de tension 19. Une quatrième poulie 20, montée fixe sur le châssis complète le guidage du fil. Ce guidage est renforcé dans des- directions perpendiculaires au plan du fil, par montage de galets 22. La latitude de déplacement du chariot 14 est telle que la poulie 17 peut être positionnée de part et d'autre du plan médian longitudinal de la volaille 5, c'est-à-dire de part et d'autre du plan passant par le sternum 21 de cette dernière.

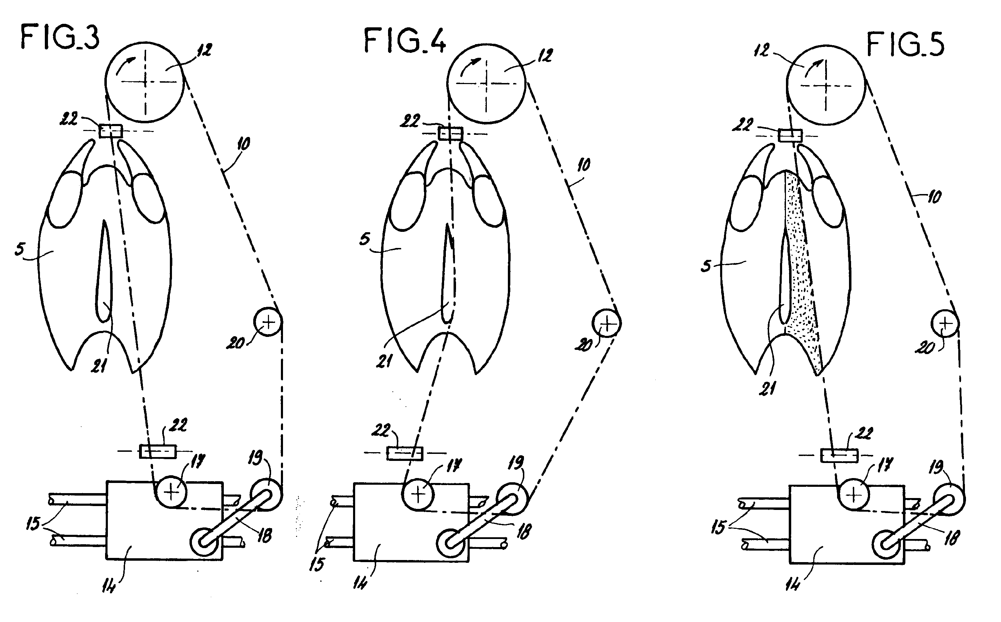

Comme montré à la figure 2, le mouvement de pivotement du châssis est obtenu par un vérin hydraulique 25, dont le corps est monté articulé sur le bâti autour d'un axe 26, parallèle à l'axe 9, et dont l'extrémité de la tige 27 est articulée sur une ferrure 28 solidaire du châssis. Le vérin 25 étant un vérin hydraulique, pour des raisons de précisions de positionnement, il est possible de lui adjoindre un système 29 formant interface, avec une commande pneumatique, dans la mesure où le dispositif est inserré dans une installation à commande pneumatique.

Sur le châssis 8 est monté pivotant autour de l'axe 9, un bras 23, dont l'extrémité libre est équipée d'un organe profilé 24 orienté parallèlement au sternum 21 de la volaille, et destiné à prendre appui sur celui-ci, pour former un guide pour le fil de coupe. Le bras 23 est associé à une butée le maintenant parallèle au plan du fil de coupe, quand le châssis est en position relevée, mais permettant son pivotement par rapport au châssis, après appui de la butée 24 contre le sternum lors de la poursuite du mouvement de basculement du châssis.

Le fonctionnement de ce dispositif est le suivant :

Une volaille 5 étant positionnée sur un outil de contention, d'axe horizontal, de telle sorte que son sternum soit tourné vers le haut, il est tout d'abord procédé à une descente rapide du châssis par pivotement autour de l'axe 9, le jeu de poulies se trouvant dans la position représentée à la figure 3, jusqu'à ce que le fil arrive au contact de la volaille et la butée 24 au contact du sternum. Le chariot 14 est alors déplacé vers la gauche, mouvement au cours duquel la portion de fil comprise entre les poulies 12 et 17 prend appui sur la carcasse elle-même et sur le guide 24, qui a pris préalablement appui sur le sternum, comme montré à la figure 4. La poursuite du mouvement de pivotement du châssis est effectuée à vitesse lente, avec déplacement du chariot 14 et de la poulie 17 vers la droite, comme montré à la figure 5, afin de suivre le contour de la volaille. Lorsque la coupe a atteint une valeur prédéterminée, il est procédé à un mouvement de pivotement du châssis en sens inverse, puis à l'arrêt du mouvement du fil coupant.

Ce dispositif permet de réaliser la découpe des filets droit ou gauche d'une volaille, en une seule opération ou en plusieurs opérations, s'il est envisagé par exemple une opération d'arrachement des ailes ou des coracoïdes après la première découpe.

Comme il ressort de ce qui précède, l'invention apporte une grande amélioration à la technique existante, en fournissant un dispositif de coupe de conception simple, permettant de suivre au plus près la partie osseuse de la carcasse d'une volaille pour séparer la viande de celle-ci.

Comme il va de soi, ce dispositif qui peut être utilisé indépendamment ou dans le cadre d'une installation complexe de découpe, peut être mise en oeuvre pour la découpe de différentes autres viandes ou chairs de poissons.

## Revendications

1. Dispositif de découpe de la viande d'une pièce de viande ou de la viande d'une carcasse d'animal comprenant un châssis (8) sur lequel est monté un jeu de poulies à axes parallèles servant au guidage d'un fil de coupe (10), une de ces poulies étant motorisée, et une autre étant une poulie de tension, caractérisé en ce qu'il comprend un outil de contention connu en soi, un bâti fixe (2) à l'extrémité supérieure duquel est articulé, autour d'un axe horizontal (9) et transversal à l'axe (4) de l'outil de contention, le châssis (8) équipé du jeu de poulies servant au guidage d'un fil de coupe (10), ce jeu de poulie dont l'une d'entre elles est motorisée, comprenant une première poulie (12) située à une distance de l'axe d'articulation (9) du châssis supérieure à la distance entre cet axe et l'extrémité de l'outil de contention qui en est le plus éloignée, une tangente à cette poulie étant sensiblement située dans le plan médian longitudinal de l'outil de contention, une seconde poulie d'axe parallèle à la première, montée sur un chariot (14) déplaçable parallèlement à l'axe d'articulation du châssis (8), cette poulie étant susceptible lors du mouvement du chariot d'être amenée de part et d'autre du plan médian longitudinal de l'outil de contention, une troisième poulie (19) associée au chariot, d'axe parallèle à ceux des deux premières, qui est une poulie de tension, et éventuellement d'autres poulies de guidage (20) montées sur le châssis.

2. Dispositif selon la revendication 1, caractérisé en ce que la poulie motorisée (12) est celle située le plus loin de l'axe d'articulation (9) du châssis, et en ce qu'elle est entraînée en rotation par un moteur électrique (13) monté sur le châssis.

3. Dispositif selon l'une quelconque des revendications 1 et 2, caractérisé en ce que le guidage du chariot (14) est réalisé sur des colonnes (15) solidaires du châssis, et son déplacement est réalisé par un vérin (16) dont le corps est fixé sur le châssis et la tige est fixée sur le chariot.

4. Dispositif selon l'une quelconque des revendications 1 à 3, caractérisé en ce que le châssis (8) est monté sur le bâti (2) avec interposition d'un support (6), ce support étant monté sur le bâti avec possibilité de réglage angulaire autour d'un axe (3) parallèle à l'axe (4) de contention de la pièce de viande, et le châssis (8) étant monté pivotant sur le support (6) autour d'un axe (9) perpendiculaire à l'axe de contention de la pièce de viande.

5. Dispositif selon l'une quelconque des revendications 1 à 4, caractérisé en ce que le mouvement de basculement du châssis (8) est réalisé par l'intermédiaire d'un vérin hydraulique (25) dont le corps est articulé autour d'un axe (26) horizontal et parallèle à l'axe de basculement sur le bâti ou le support de châssis monté sur ce dernier, et dont l'extrémité de la tige (27) est articulée autour d'un axe parallèle au précédent sur le châssis.

6. Dispositif selon l'une quelconque des revendications 1 à 5, caractérisé en ce qu'il est équipé d'un guide allongé et orienté selon l'axe de la ligne d'attaque de la coupe, destiné à venir prendre appui sur la face supérieure de la pièce de viande, ce guide étant monté sur un bras articulé sur le châssis (8) autour d'un axe correspondant à l'axe de pivotement (9) du châssis et agencé pour demeurer en appui contre la pièce de viande au cours de la fin du basculement du châssis.

7. Dispositif selon l'ensemble des revendications 1 à 6, caractérisé en ce que ses moyens de commande sont tels que, partant d'une position dans laquelle le châssis (8) portant le fil de coupe (20) se trouve éloigné de la pièce de viande, il est procédé successivement à la détection de présence de celle-ci, au basculement du châssis (8) à grande vitesse en direction de la pièce, jusqu'à ce que le fil (10) arrive au contact de cette dernière, le chariot (14) étant dans une position telle que la poulie motrice (12) et la poulie adjacente (17) portée par le chariot sont toutes les deux situées du même côté de la ligne d'attaque de la coupe et plus précisément du côté où la découpe doit être effectuée, au déplacement du chariot (14) pour amener la poulie solidaire de celui-ci de l'autre côté de cette ligne, à la poursuite du mouvement de basculement à vitesse lente, tout en procédant à un déplacement du chariot en sens inverse de celui du déplacement précédent, en tenant compte du profil de la surface délimitant les deux zones de dureté différente, avec entraînement du fil de coupe, puis au basculement en sens inverse du châssis avec arrêt du fil de coupe.

8. Dispositif selon l'une quelconque des revendications 1 à 7, caractérisé en ce que dans la mesure où il est destiné à la découpe d'un filet d'une volaille, l'outil de contention comporte des moyens de fixation par l'intérieur de la volaille, sternum tourné du côté du châssis, et son axe (4) est transversal à l'axe (9) d'articulation du châssis, la seconde poulie (17) étant déplaçable de part et d'autre du plan médian longitudinal contenant l'axe (4) de l'outil de contention.

9. Dispositif selon l'ensemble des revendications 1 à 8, caractérisé en ce que ses moyens de commande sont tels que, partant d'une position dans laquelle le châssis (8) portant le fil de coupe (20) se trouve éloigné de la volaille, il est procédé successivement à la détection de présence de la volaille, au basculement du châssis (8) à grande vitesse en direction de la volaille, jusqu'à ce que le fil (10) arrive au contact de cette dernière, le chariot (14) étant dans une position telle que la poulie motrice (12) et la poulie adjacente (17) portée par le chariot sont toutes les deux situées du même côté du sternum et plus précisément du côté où le filet doit être découpé, au déplacement du chariot (14) pour amener la poulie solidaire de celui-ci de l'autre côté du sternum, à la poursuite du mouvement de basculement à vitesse lente, tout en procédant à un déplacement du chariot en sens inverse de celui du déplacement précédent, en tenant compte du profil de la carcasse de la volaille, avec entraînement du fil de coupe, puis au basculement en sens inverse du châssis avec arrêt du fil de coupe.

## Patentansprüche

1. Einrichtung zum Abtrennen von Fleisch von einem Fleischstück oder von Fleisch von einem Tierrumpf, umfassend ein Gestell (8), auf dem ein Satz von Riemenscheiben mit parallelen Achsen angeordnet ist, die als Führung eines Schneiddrahtes (10) dienen, wobei eine dieser Riemenscheiben motorgetrieben und eine andere eine Spannrolle ist, dadurch **gekennzeichnet,** daß sie ein an sich bekanntes Haltewerkzeug umfaßt, ferner ein festes Grundgestell (2), an dessen oberem Ende um eine horizontale und quer zur Achse (4) des Haltewerkzeuges stehende Achse (9) gelenkig das mit dem Satz der als Führung für einen Schneiddraht (10) dienenden Riemenscheiben ausgestattete Gestell (8) angeordnet ist, wobei der Riemenscheibensatz, von denen eine motorgetrieben ist, eine erste Riemenscheibe (12) umfaßt, die in einem Abstand von der Schwenkachse (9) des Gestells angeordnet ist, der größer als der Abstand zwischen dieser Achse und dem Ende des Haltewerkzeuges ist, das davon weiter entfernt ist, wobei eine Tangente an diese Riemenscheibe im wesentlichen in der Längsmittelebene des Haltewerkzeuges liegt, ferner eine zweite Riemenscheibe mit einer zur ersteren parallelen Achse, welche auf einem parallel zur Schwenkachse des Gestells (8) verfahrbaren Schlitten (14) montiert ist, wobei diese Riemenscheibe während der Bewegung des Schlittens auf beide Seiten der Längsmittelebene des Haltewerkzeuges verbracht werden kann, ferner eine dritte, dem Schlitten zugeordnete Riemenscheibe (19) mit einer zu denen der beiden ersteren parallelen Achse und welche eine Spannrolle ist, sowie gegebenenfalls andere, am Gestell montierte Führungsriemenscheiben(20).

2. Einrichtung nach Anspruch 1, dadurch **gekennzeichnet,** daß die motorgetriebene Riemenscheibe (12) die am weitesten von der Schwenkachse (9) des Gestells entfernte ist und daß sie von einem elektrischen, auf dem Gestell montierten Motor (13) drehangetrieben wird.

3. Einrichtung nach einem der Ansprüche 1 und 2, dadurch **gekennzeichnet,** daß die Führung des Schlittens (14) auf mit dem Gestell fest verbundenen Säulen (15) realisiert ist und daß seine Verstellung durch einen Stellantrieb (16) bewirkt wird,dessen Hauptkörper am Gestell und dessen Schubstange am Schlitten befestigt ist.

4. Einrichtung nach einem der Ansprüche 1 bis 3, dadurch **gekennzeichnet,** daß das Gestell (8) auf dem Grundgestell (2) unter Zwischenschaltung eines Supportes (6) montiert ist, wobei der Support auf dem Grundgestell (2) mit der Möglichkeit einer Winkeleinstellung um eine Achse (3) montiert ist, die parallel zur Halteachse (4) des Fleischstückes ist, und wobei das Gestell (8) auf dem Support (6) um eine Achse (9) schwenkbar montiert ist, die senkrecht zur Halteachse des Fleischstückes steht.

5. Einrichtung nach einem der Ansprüche 1 bis 4, dadurch **gekennzeichnet,** daß die Kippbewegung des Gestells (8) mittels eines hydraulischen Stellantriebes (25) bewirkt wird, dessen Hauptkörper um eine horizontale und zur Kippachse parallele Achse (25) schwenkbar am Grundgestell oder an dem auf dem letzteren montierten Gestellsupport angeordnet ist, und dessen Schubstangenende (27) um eine zur vorgenannten parallele Achse gelenkig am Gestell angeordnet ist.

6. Einrichtung nach einem der Ansprüche 1 bis 5, dadurch **gekennzeichnet,** daß sie mit einer langgestreckten und entsprechend der Achse der Angriffslinie des Schnittes ausgerichteten Führung ausgestattet ist, die sich auf der Oberseite des Fleischstückes abstützen soll, wobei diese Führung auf einem auf dem Gestell um eine Achse gelenkig angeordneten Arm montiert ist, die der Schwenkachse (9) des Gestells entspricht und so betätigt wird, daß sie im Verlauf des Endes der Kippung des Gestells in Anlage am Fleischstück bleibt.

7. Einrichtung nach der Gesamtheit der Ansprüche 1 bis 6, dadurch **gekennzeichnet,** daß die Steuermittel so ausgelegt sind, daß, ausgehend von einer Position, bei der das den Schneiddraht (20) tragende Gestell (8) vom Fleischstück entfernt ist, nacheinander zunächst das Vorhandensein desselben festgestellt wird, das Gestell (8) mit großer Geschwindigkeit in Richtung zu diesem Stück gekippt wird, bis der Draht (10) in Kontakt mit dem letzteren kommt, wobei der Schlitten (14) sich in einer derartigen Position befindet, daß die motorgetriebene Riemenscheibe (12) und die benachbarte, vom Schlitten getragene Riemenscheibe (17) sich beide auf derselben Seite der Angriffslinie des Schnittes befinden, genauer auf der Seite, wo das Abtrennen stattfinden soll, daß der Schlitten (14) verfahren wird, um die mit diesem fest verbundene Riemenscheibe auf die andere Seite dieser Linie zu verbringen, daß die Kippbewegung mit langsamer Geschwindigkeit fortgesetzt wird, wobei gleichzeitig der Schlitten in einer zur vorherigen Verstellung entgegengesetzten Richtung unter Berücksichtigung des Profils der die beiden Zonen unterschiedlicher Härte begrenzenden Fläche verfahren wird bei gleichzeitigem Antrieb des Schneiddrahtes, und daß das Gestell in entgegengesetzter Richtung gekippt und der Schneiddraht angehalten wird.

8. Einrichtung nach einem der Ansprüche 1 bis 7, dadurch **gekennzeichnet,** daß, soweit sie zum Abtrennen eines Geflügelfilets bestimmt ist, das Haltewerkzeug Mittel zum Befestigen des Geflügels von innen her umfaßt, wobei das Brustbein zur Gestellseite gerichtet ist, und daß seine Achse (4) quer zur Schwenkachse (9) des Gestelles steht, wobei die zweite Riemenscheibe (17) auf beide Seiten der Längsmittelebene verstellbar ist, welche die Achse (4) des Haltewerkzeuges enthält.

9. Einrichtung nach der Gesamtheit der Ansprüche 1 bis 8, dadurch **gekennzeichnet,** daß die Steuermittel so beschaffen sind, daß, ausgehend von einer Position, bei der das den Schneiddraht (20) tragende Gestell (8) vom Geflügel entfernt ist, nacheinander zunächst das Vorhandensein des Geflügels festgestellt wird, daß das Gestell (8) mit großer Geschwindigkeit in Richtung zum Geflügel gekippt wird, bis der Draht (10) in Kontakt mit dem letzteren kommt, wobei der Schlitten (14) sich in einer derartigen Position befindet, daß die motorgetriebene Riemenscheibe (12) und die benachbarte, vom Schlitten getragene Riemenscheibe (17) sich beide auf derselben Seite des Brustbeins und genauer auf der Seite befinden, wo das Filet abgetrennt werden soll, daß der Schlitten (14) verfahren wird, um die mit diesem fest verbundene Riemenscheibe auf die andere Seite des Brustbeins zu verbringen, daß die Kippbewegung mit langsamer Geschwindigkeit fortgestetzt wird, wobei gleichzeitig der Schlitten in einer zur vorangehenden Verstellung entgegengesetzten Richtung unter Berücksichtigung des Profils des Rumpfes des Geflügels verfahren wird bei gleichzeitigem Antrieb des Schneiddrahtes, und daß das Gestell in entgegengesetzter Richtung gekippt und der Schneiddraht angehalten wird.

## Claims

1. Device for cutting meat from a piece of meat or meat from an animal carcass, comprising a frame (8) on which is mounted a set of pulleys with parallel axes, serving to guide a cutting wire (10), one of these pulleys being driven and the other being a tension pulley, characterised in that it comprises a holding tool, known per se, a fixed base (2) at the top end of which is articulated, about a horizontal shaft (9) and transverse to the axis (4) of the holding tool, the frame (8) equipped with the set of pulleys serving to guide a cutting wire (10), this set of pulleys, one of which is driven, comprising a first pulley (12) situated at a distance from the axis (9) of articulation of the frame greater than the distance between this axis and the end of the holding tool which is furthest away from it, a tangent to this pulley being situated approximately in the longitudinal mid-plane of the holding tool, a second pulley with an axis parallel to the first, mounted on a carriage (14) which can be moved parallel to the axis of articulation of the frame (8), this pulley being capable, when the carriage is moved, of being brought on each side of the longitudinal mid-plane of the holding tool, a third pulley (19) associated with the carriage, with an axis parallel to those of the first two and which is a tension pulley, an optionally other guide pulleys (20) mounted on the frame.

2. Device according to Claim 1, characterised in that the driving pulley (12) is the one situated the furthest away from the axis of articulation (9) of the frame, and in that it is rotated by an electric motor (13) mounted on the frame.

3. Device according to either one of Claims 1 or 2, characterised in that the carriage (14) is guided on columns (15) secured to the frame and is moved by a ram (16), the body of which is fixed to the frame and the stem of which is fixed to the carriage.

4. Device according to any one of Claims 1 to 3, characterised in that the frame (8) is mounted on the base (2) with a support (6) interposed, this support being mounted on the base with a facility for angular adjustment about an axis (3) parallel to the holding axis (4) of the piece of meat, and the frame (8) being mounted so as to pivot on the support (6) about an axis (9) perpendicular to the holding axis of the piece of meat.

5. Device according to any of Claims 1 to 4, characterised in that the tilting movement of the frame (8) is effected by means of a hydraulic ram (25), the body of which is articulated about a horizontal axis (26) parallel to the axis of tilting on the base or the frame support mounted on the latter, and the end of the stem (27) of which is articulated about an axis parallel to the aforementioned one on the frame.

6. Device according to any one of Claims 1 to 5, characterised in that it is equipped with an elongate guide oriented along the axis of the cutting feed line, designed to bear against the top face of the piece of meat, this guide being mounted on an arm articulated on the frame (8) about an axis corresponding to the axis of pivoting (9) of the frame and arranged to remain pressed against the piece of meat during the final tilting of the frame.

7. Device according to Claims 1 to 6 as a whole, characterised in that its controls means are such that, starting from a position in which the frame (8) carrying the cutting wire (20) is away from the piece of meat, successive steps are carried out consisting of the detection of the presence of the meat, the tilting of the frame (8) at high speed in the direction of the piece until the wire (10) comes into contact with the latter, the carriage (14) being in a position such that the driving pulley (12) and the adjacent pulley (17) carried by the carriage are both situated on the same side of the cutting feed line and more precisely on the side where the cut is to be made, the movement of the carriage (14) to bring the pulley secured to it on the other side of this line, the continuance of the tilting movement at slow speed whilst moving the carriage in the opposite direction to the previous movement, taking account of the profile of the surface defining the two zones of different hardness, with driving of the cutting wire, and then the tilting of the frame in the opposite direction with stoppage of the cutting wire.

8. Device according to any of Claims 1 to 7, characterised in that, since it is designed for the cutting of a fillet from a fowl, the holding tool has means for gripping by the inside of the fowl, with the sternum oriented towards the frame, and its axis (4) is transverse to the axis (9) of articulation of the frame, the second pulleys (17) being movable on each side of a longitudinal mid-plane containing the axis (4) of the holding tool.

9. Device according to Claims 1 to 8 as a whole, characterised in that its control means are such that, starting from a position in which the frame (8) carrying the cutting wire (20) is away from the fowl, successive steps are carried out consisting of the detection of the presence of the fowl, the tilting of the frame (8) at high speed in the direction of the fowl, until the wire (10) comes into contact with the latter, the carriage (14) being in a position such that the driving pulley (12) and the adjacent pulley (17) carried by the carriage are both situated on the same side of the sternum and more precisely on the side where the fillet is to be cut, the movement of the carriage (14) to bring the pulley secured to it on the other side of the sternum, the continuance of the tilting movement at slow speed whilst moving the carriage in the opposite direction to the previous movement, taking account of the profile of the carcass of the fowl, with driving of the cutting wire, and then the tilting of the frame in the opposite direction with stoppage of the cutting wire.
